(19) **Europäisches Patentamt / European Patent Office / Office européen des brevets**

(11) **EP 2 998 976 B1**

(12) **FASCICULE DE BREVET EUROPEEN**

(45) Date de publication et mention
de la délivrance du brevet:
**27.11.2019 Bulletin 2019/48**

(51) Int Cl.:
**H01H 9/36** *(2006.01)*      **H01H 85/38** *(2006.01)*
**H01H 85/048** *(2006.01)*      **H01H 85/54** *(2006.01)*

(21) Numéro de dépôt: **15183149.2**

(22) Date de dépôt: **31.08.2015**

(54) **ORGANE DE COUPURE D'UN DISPOSITIF DE PROTECTION D'UNE INSTALLATION ÉLECTRIQUE CONTRE LA FOUDRE**

ABSCHALTELEMENT EINER SCHUTZVORRICHTUNG EINER ELEKTROINSTALLATION ZUR BLITZABLEITUNG

CUT-OFF MEMBER OF A DEVICE FOR PROTECTING AN ELECTRICAL INSTALLATION AGAINST LIGHTNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2014 FR 1458707**

(43) Date de publication de la demande:
**23.03.2016 Bulletin 2016/12**

(73) Titulaire: **ABB Schweiz AG**
**5400 Baden (CH)**

(72) Inventeurs:
• **GAUTIER, Boris**
**65100 LOURDES (FR)**

• **CLAVERIE, Malvina**
**65300 LANNEMEZAN (FR)**

(74) Mandataire: **Verriest, Philippe et al**
**Cabinet Germain & Maureau**
**12, rue Boileau**
**BP 6153**
**69466 Lyon Cedex 06 (FR)**

(56) Documents cités:
**EP-A1- 1 887 667      EP-A1- 2 639 813**
**DE-A1- 2 213 985      DE-A1- 2 434 897**
**FR-A- 1 206 556      FR-A1- 2 815 767**
**FR-A1- 2 917 532      US-A- 4 019 006**

EP 2 998 976 B1

**Description**

La présente invention se rapporte à un organe de coupure destiné à protéger des élévations anormales d'intensité de courant et plus particulièrement des mises en court-circuit, un dispositif de protection d'une installation électrique contre la foudre.

Il est connu d'utiliser des éléments fusibles ou des disjoncteurs standards issus du commerce pour protéger des mises en court-circuit les dispositifs de protection d'installations électriques, comme les parafoudres. Or, ces éléments fusibles ou disjoncteurs sont mal adaptés pour la protection des parafoudres. En effet, ils ne sont pas conçus spécifiquement pour résister aux chocs dus à la foudre et pour ouvrir le circuit électrique en un temps suffisamment court pour protéger efficacement le parafoudre. En conséquence, il est nécessaire de surdimensionner les connectiques internes du parafoudre pour répondre au manque de réactivité de l'organe de coupure, ce qui entraîne un coût supplémentaire de ces dispositifs et un temps de réalisation plus important.

Par exemple, le document FR2917532 décrit un organe de coupure destiné à être intégré à un circuit électrique comprenant un dispositif de protection d'une installation électrique contre la foudre.

La présente invention a pour objectif de résoudre tout ou partie des inconvénients mentionnés ci-dessus.

La présente invention concerne un organe de coupure tel que défini dans la revendication 1.

Grâce aux dispositions selon l'invention, l'organe de coupure est adapté pour la protection particulière des dispositifs de protection d'installations électriques contre la foudre. La combinaison du dispositif d'augmentation de tension d'arc et du fusible permet d'obtenir à la fois une capacité de coupure du courant de court-circuit améliorée et une réactivité accrue en cas de court-circuit du parafoudre.

Selon un aspect de l'invention, la section de l'élément fusible est comprise entre un et trois millimètres carré.

La présente invention se rapporte également à un ensemble comprenant :

- un dispositif de protection d'une installation électrique contre la foudre ;
- un organe de coupure conforme à l'une quelconque des caractéristiques susmentionnées, monté en série par rapport au dispositif de protection.

Suivant des caractéristiques optionnelles de l'ensemble selon l'invention :

- l'organe de coupure est amovible du circuit électrique, ainsi, le remplacement et la maintenance de l'organe de coupure sont facilités ;
- les bornes de raccordement au circuit électrique sont constituées par des broches, ce qui permet de mettre en place et de retirer facilement l'organe de coupure du circuit électrique.

D'autres caractéristiques et avantages apparaîtront à la lumière de la description qui va suivre et à l'examen des figures ci-annexées, dans lesquelles :

- la figure 1 représente un organe de coupure qui ne fait pas partie de l'invention

- la figure 2 représente un organe de coupure amovible avec des broches;

- la figure 3 représente un organe de coupure selon l'invention.

Sur l'ensemble de ces figures, des références identiques ou analogues désignent des organes ou ensemble d'organes identiques ou analogues.

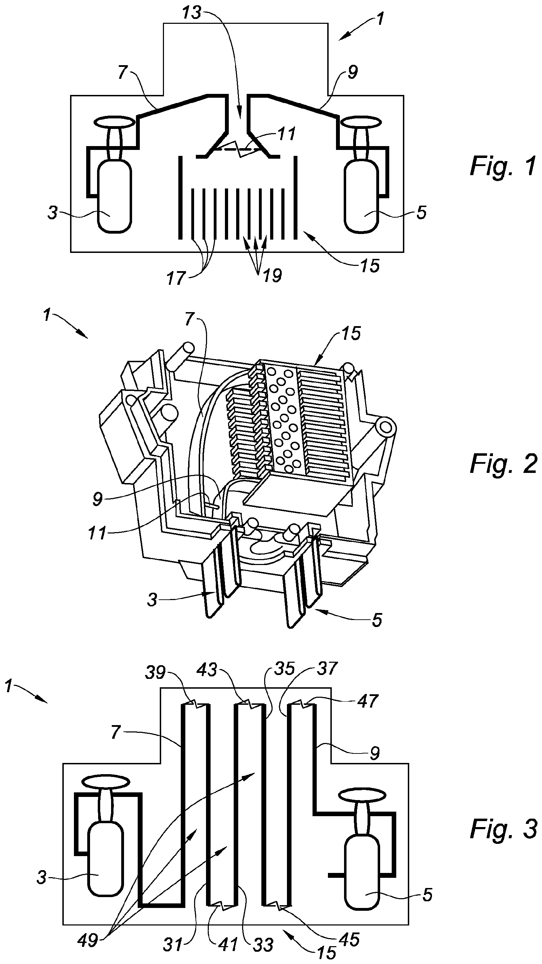

Un organe de coupure 1 est représenté en figure 1. L'organe de coupure 1 comprend une première borne de raccordement 3 et une seconde borne de raccordement 5 qui sont destinées à être reliées à un circuit électrique. Le circuit électrique comprend un dispositif de protection d'une installation électrique contre la foudre, ici un parafoudre. L'organe de coupure 1 est destiné à être monté en série avec le parafoudre afin de le protéger contre les mises en court-circuit. L'organe de coupure 1 est donc disposé en amont du parafoudre dans le circuit électrique. Le circuit électrique comprend également une installaton électrique montée en dérivation par rapport à l'organe de coupure 1 et au parafoudre. Le parafoudre est destiné à protéger l'installation électrique contre les surtensions provoquées par la foudre.

L'organe de coupure 1 comprend deux armatures principales : une première armature 7 conductrice reliée électriquement à la borne de raccordement 3 et une deuxième armature 9 conductrice reliée électriquement à la borne de raccordement 5. Un fusible 11 est relié électriquement d'une part à l'armature 7 et d'autre part à l'armature 9.

Le fusible 11 est apte à fondre lorsque l'intensité du courant traversant l'organe de coupure 1 atteint une intensité de seuil pendant une période de temps de seuil.

La période de temps de seuil est la période de temps à partir de laquelle le dispositif de protection d'une installation électrique se détériore. La période de temps de seuil est inférieure à une seconde et supérieure à quelques dizaines de microsecondes et de préférence est de l'ordre de quelques dizaines de millisecondes. Par exemple, une période de temps de seuil peut être de l'ordre de cent vingt millisecondes.

Le fusible 11 est apte à supporter une surtension due à la foudre. En effet, une telle surtension n'intervient que pendant une période de temps inférieure à la période de temps de seuil, nécessaire pour la destruction du fusible 11. Un telle surtension intervient pendant quelques dizaines de microsecondes, par exemple sur une période de temps de l'ordre de cinquante microsecondes.

Lorsque le parafoudre est mis en court-circuit et que le fusible 11 fond, les armatures 7, 9 ne sont plus reliées électriquement et définissent entre elles une ouverture 13.

Un dispositif d'augmentation de la tension d'arc entre les armatures 7, 9, ici une chambre d'extinction 15, est disposé en regard de l'ouverture 13. La chambre d'extinction 15 est constituée par une pluralité de plaques de déionisation 17. Les plaques de déionisation 17 définissent des espaces 19 entre elles, débouchant en regard l'ouverture 13. Les plaques de déionisation 17 sont sensiblement parallèles entre elles.

En cas de mise en court-circuit du parafoudre, l'organe de coupure 1 est parcouru par un courant d'intensité supérieure à l'intensité de seuil. Le fusible se détruit et un différentiel de potentiel s'établit entre les armatures 7, 9 séparées uniquement par l'ouverture 13. A partir d'un différentiel de potentiel de seuil, appelé tension d'arc, un arc électrique se forme entre les armatures 7, 9. La formation d'un arc électrique permet au courant de continuer à circuler dans le circuit électrique, d'atteindre le parafoudre et de l'endommager.

La chambre d'extinction 15 permet d'éteindre l'arc électrique en augmentant la tension d'arc entre les armatures 7, 9. En effet, les plaques de déionsation 17 permettent l'allongement de l'arc électrique en l'attirant vers elles. Lorsque l'arc électrique les atteint, il est divisé en plusieurs portions, chacune des portions étant formée entre deux plaques de déionisation 17 consécutives. De cette manière, la tension d'arc entre les armatures 7, 9 augmente et l'arc électrique tend à s'éteindre.

La formule de l'échauffement du fusible 11 est la suivante : $\Delta\theta = \dfrac{\rho I^2 t}{s^2 \omega C}$ dans laquelle : $\Delta\theta$ est l'échauffement ; $\rho$ est la résistivité du matériau ; I est l'intensité ; t est la durée ; s est la section ; $\omega$ est masse volumique du matériau et C est la capacité thermique du matériau.

Le matériau constituant le fusible 11 est caractérisé par une résistivité comprise entre trente et trois cents micro-ohms-millimètres et préférenciellement de l'ordre de cent micro-ohms-millimètres, comme par exemple l'acier.

De préférence, la section du fusible 11 est comprise entre un et trois millimètres carré.

Selon un exemple de réalisation de l'invention, le fusible 11 est constitué de laiton ayant une résistivité de $3,91.10^{-5}$ Ohm.mm, une capacité thermique massique de 376J/(kg.°K), une masse volumique de $8,5.10^{-6}$ kg/mm$^3$, une température de fusion de 1300°C et une limite élastique de 200N/mm$^2$. Pour une tenue thermique à la foudre, c'est-à-dire pour un échauffement d'environ 200°C, pour une onde 8/20 et sous un courant d'environ 40kA, le fusible 11 doit avoir une section de 1mm$^2$. Le temps de fusion d'un tel fusible 11 sous un courant de 1000A est de 0,12s. La résistance mécanique à la traction d'un tel fusible 11 est de 200N.

Selon un autre exemple de réalisation de l'invention, le fusible 11 est constitué d'acier doux ayant une résistivité de $1,1.10^{-4}$ Ohm.mm, une capacité thermique massique de 480J/(kg.°K), une masse volumique de $7,8.10^{-6}$ kg/mm$^3$, une température de fusion de 1300°C et une limite élastique de 240N/mm$^2$. Pour une tenue thermique à la foudre, c'est-à-dire pour un échauffement d'environ 200°C, pour une onde 8/20 et sous un courant d'environ 40kA, le fusible 11 doit avoir une section de 1,5mm$^2$. Le temps de fusion d'un tel fusible 11 sous un courant de 1000A est de 0,12s. La résistance mécanique à la traction d'un tel fusible 11 est de 360N.

L'utilisation de matériaux de plus faible résistivité, par exemple le cuivre, impliquerait une plus faible section de fusible 11 et donc une plus faible résistance mécanique.

L'utilisation de matériaux de plus forte résistivité, par exemple l'acier inoxidable, impliquerait une section de fusible 11 plus importante et donc un volume important de matière en fusion, susceptible de polluer les partie interne de l'organe de coupure.

L'utilisation de matériaux comme le laiton et l'acier doux permettent d'obtenir une résistance mécanique appréciable tout en limitant la section du fusible, et donc d'obtenir un volume de matériau en fusion raisonnable.

Selon un mode de réalisation représenté en figure 2, l'organe de coupure 1 est disposé dans une cartouche amovible. Les bornes de raccordement 7, 9 sont constituées par des broches 3, 5 permettant de raccorder et de retirer la cartouche facilement du circuit électrique en cas de besoin de remplacement ou de maintenance de l'organe de coupure 1.

Suivant un aspect qui ne fait pas partie de l'invention selon les premier et second modes de réalisation, les plaques de déionisation 17 sont disposées selon une configuration dite en étoile. Dans une telle configuration, l'écartement entre deux plaques de déionisation 17 consécutives se reduit en direction du fusible 11.

Selon un mode de réalisation représenté en figure 3, le dispositif d'augmentation de la tension d'arc 15 est constitué par une pluralité d'armatures secondaires disposées entre les armatures 7, 9. Ici, quatre armatures secondaires 31, 33, 35, 37, sensiblement parallèles entre elles, sont représentées. Les armatures secondaires 31, 33, 35, 37 sont disposées entre les armatures 7, 9. Un fusible 39 relie électriquement l'armature 7 et l'armature secondaire 31 ; un fusible 41 relie électriquement l'armature secondaire 31 et l'armature secondaire 33 ; un fusible 43 relie électriquement l'armature secondaire 33 et l'armature secondaire 35 ; un fusible 45 relie électriquement l'armature secondaire 35 et l'armature secondaire 37 ; un fusible 47 relie électriquement l'armature secondaire 37 et l'armature 9. Lors de la mise en court-circuit du parafoudre, les fusibles 39, 41, 43, 45, 47 fondent et se détruisent. Les armatures 7, 9 et les armatures secondaires 31, 33, 35, 37 sont séparées par des ouvertures 49. La tension d'arc entre l'armature 7 et l'armature 9 est équivalente à la somme des tensions d'arc entre deux armatures 7, 9 et/ou armatures secondaires 31, 33, 35, 37 adjacentes. L'ajout des armatures secondaires 31, 33, 35, 37 permet donc d'augmenter la tension d'arc entre l'armature 7 et l'armature 9.

Les fusibles utilisés dans ce mode de réalisation ont les mêmes caractéristiques que les fusibles décrits avant. Le dispositif d'augmentation de la tension d'arc 15 peut comporter une dizaine d'armatures secondaires, sensiblement parallèles entre elles et disposées entre les armatures 7 et 9.

Bien entendu, la présente invention ne se limite pas aux modes de réalisation décrits et représentés, fournis à titre d'exemples illustratifs et non limitatifs.

## Revendications

1. Organe de coupure destiné à être intégré à un circuit électrique comprenant un dispositif de protection d'une installation électrique contre la foudre, l'organe de coupure étant monté en série par rapport au dispositif de protection d'une installation électrique et l'organe de coupure (1) comprenant :

   - une première armature (7) conductrice reliée électriquement à une première borne de raccordement (3) au circuit électrique et une seconde armature (9) conductrice reliée électriquement à une seconde borne de raccordement (5) au circuit électrique ;
   - au moins un élément fusible (11) disposé entre la première armature (7) et la seconde armature (9) et relié électriquement à la première armature (7) et à la seconde armature (9), l'au moins un élément fusible (11) étant agencé pour fondre lorsqu'il est traversé par un courant d'une intensité de seuil sur une période de temps de seuil
   - un dispositif d'augmentation d'une tension d'arc (15) entre la première armature (7) et la seconde armature (9) en cas de fonte de l'au moins un élément fusible (11), le dispositif d'augmentation de la tension d'arc (15) est constitué par une pluralité d'armatures secondaires (31, 33, 35, 37) disposées entre la première armature (7) et la deuxième armature (9), les armatures secondaires (31, 33, 35, 37) étant séparées par des ouvertures (49), **caractérisé en ce que** le matériau constituant l'élément de fusible (11) ayant une résistivité comprise entre trente et trois cent micro-ohms-millimètres, et **en ce que**

   le dispositif d'augmentation d'une tension d'arc (15) comprenant une armature secondaire (31) conductrice reliée électriquement à la première armature (7) par l'intermédiaire d'un premier élément fusible (39) de l'au moins un élément fusible (11) et une autre armature secondaire (37) conductrice reliée électriquement à la seconde armature (9) par l'intermédiaire d'un deuxième élément fusible (47) de l'au moins un élément fusible (11),

   le dispositif d'augmentation d'une tension d'arc (15) comprenant au moins deux armatures secondaires (33, 35) additionnelles, chaque armature secondaire (31, 33, 35, 37) étant reliée électriquement à l'armature secondaire (31, 33, 35, 37) adjacente par au moins un élément fusible correspondant (41, 43, 45) de l'au moins un élément fusible (11).

2. Organe de coupure selon la revendication 1, dans lequel la section de l'élément fusible (11) est comprise entre un et trois millimètres carré.

3. Ensemble comprenant :

   - un dispositif de protection d'une installation électrique contre la foudre intégré à un circuit électrique ;
   - un organe de coupure (1) conforme à l'une quelconque des revendications précédentes, intégré au circuit électrique et monté en série par rapport au dispositif de protection.

4. Ensemble selon la revendication 3 dans lequel l'organe de coupure (1) est amovible du circuit électrique.

5. Ensemble selon la revendication 4, dans lequel les bornes de raccordement (3, 5) au circuit électrique sont constituées par des broches.

## Patentansprüche

1. Abschaltelement, das ausgelegt ist, um in eine elektrische Schaltung integriert zu sein, umfassend eine Schutzvorrichtung einer Elektroinstallation zur Blitzableitung, wobei das Abschaltelement mit Bezug auf die Schutzvorrichtung einer Elektroinstallation in Reihe montiert ist, und wobei das Abschaltelement (1) Folgendes umfasst:

   - einen ersten leitenden Anker (7), der elektrisch mit einer ersten Anschlussklemme (3) mit der elektrischen Schaltung verbunden ist, und einen zweiten leitenden Anker (9), der elektrisch mit einer zweiten Anschlussklemme (5) mit der elektrischen Schaltung verbunden ist;
   - mindestens ein Sicherungselement (11), das sich zwischen dem ersten Anker (7) und dem zweiten Anker (9) befindet und elektrisch mit dem ersten Anker (7) und dem zweiten Anker (9) verbunden ist, wobei das mindestens eine Sicherungselement (11) angeordnet ist, um zu schmelzen, wenn es von einem Strom mit einer Schwellenintensität während eines Schwellenzeitraums durchflossen wird;

- eine Vorrichtung zur Erhöhung einer Bogenspannung (15) zwischen dem ersten Anker (7) und dem zweiten Anker (9) im Fall des Schmelzens des mindestens einen Sicherungselements (11), wobei die Vorrichtung zur Erhöhung der Bogenspannung (15) aus einer Vielzahl von sekundären Ankern (31, 33, 35, 37) besteht, die sich zwischen dem ersten Anker (7) und dem zweiten Anker (9) befindet, wobei die sekundären Anker (31, 33, 35, 37) durch Öffnungen (49) getrennt sind, **dadurch gekennzeichnet, dass** das Material, aus dem das Sicherungselement (11) besteht, eine Widerstandsfähigkeit aufweist, die zwischen dreißig und dreihundert Mikroohm-Millimeter liegt, und dadurch, dass die Vorrichtung zur Erhöhung einer Bogenspannung (15) einen sekundären leitenden Anker (31) umfasst, der elektrisch mit dem ersten Anker (7) mit Hilfe eines ersten Sicherungselements (39) des mindestens einen Sicherungselements (11) verbunden ist, und einen weiteren sekundären leitenden Anker (37), der elektrisch mit dem zweiten Anker (9) mit Hilfe eines zweiten Sicherungselements (47) des mindestens einen Sicherungselements (11) verbunden ist,

wobei die Vorrichtung zur Erhöhung einer Bogenspannung (15) mindestens zwei zusätzliche sekundäre Anker (33, 35) umfasst, wobei jeder sekundäre Anker (31, 33, 35, 37) elektrisch mit dem benachbarten sekundären Anker (31, 33, 35, 37) durch mindestens ein entsprechendes Sicherungselement (41, 43, 45) des mindestens einen Sicherungselements (11) verbunden ist.

2. Abschaltelement nach Anspruch 1, wobei der Abschnitt des Sicherungselements (11) zwischen einem und drei Quadratmillimeter liegt.

3. Einheit, umfassend:

   - eine Schutzvorrichtung einer Elektroinstallation zur Blitzableitung, die in eine elektrische Schaltung integriert ist;
   - ein Abschaltelement (1) nach einem der vorhergehenden Ansprüche, das in die elektrische Schaltung integriert und mit Bezug auf die Schutzvorrichtung in Reihe montiert ist.

4. Einheit nach Anspruch 3, wobei das Abschaltelement (1) von der elektrischen Schaltung entfernbar ist.

5. Einheit nach Anspruch 4, wobei die Anschlussklemmen (3, 5) mit der elektrischen Schaltung aus Stiften bestehen.

**Claims**

1. A cut-off member intended to be integrated into an electrical circuit comprising a device for protecting an electrical installation against lightning, the cut-off member being mounted in series relative to the device for protecting an electrical installation and the cut-off member (1) comprising:

   - a first conductive armature (7) electrically connected to a first terminal (3) for connection to the electrical circuit and a second conductive armature (9) electrically connected to a second terminal (5) for connection to the electrical circuit;
   - at least one fuse element (11) disposed between the first armature (7) and the second armature (9) and electrically connected to the first armature (7) and to the second armature (9), the at least one fuse element (11) being arranged to melt when it is traversed by a current with a threshold magnitude over a threshold time period
   - a device for increasing an arc voltage (15) between the first armature (7) and the second armature (9) in case of melting of the at least one fuse element (11), the device for increasing the arc voltage (15) is constituted by a plurality of secondary armatures (31, 33, 35, 37) disposed between the first armature (7) and the second armature (9), the secondary armatures (31, 33, 35, 37) being separated by openings (49), **characterized in that** the material constituting the fuse element (11) having a resistivity comprised between thirty and three hundred microohms-millimeters, and **in that**

the device for increasing an arc voltage (15) comprising a conductive secondary armature (31) electrically connected to the first armature (7) via a first fuse element (39) of the at least one a fuse element (11) and another conductive secondary armature (37) electrically connected to the second armature (9) via a second fuse element (47) of the at least one fuse element (11),
the device for increasing an arc voltage (15) comprising at least two additional secondary armatures (33, 35), each secondary armature (31, 33, 35, 37) being electrically connected to the adjacent secondary armature (31, 33, 35, 37) by at least one corresponding fuse element (41, 43, 45) of the at least one fuse element (11).

2. The cut-off member according to claim 1, wherein the section of the fuse element (11) is comprised between one and three square millimeters.

3. A set comprising:

   - a device for protecting an electrical installation against lightning integrated into an electrical circuit;
   - a cut-off member (1) in accordance with any one of the preceding claims, integrated into the electrical circuit and mounted in series relative to the protection device.

4. The set according to claim 3, wherein the cut-off member (1) is removable from the electrical circuit.

5. The set according to claim 4, wherein the terminals (3, 5) for connection to the electrical circuit are constituted by pins.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2917532